# EUROPEAN PATENT SPECIFICATION

(11) **EP 0 843 106 B1**
(45) Date of publication and mention of the grant of the patent: **04.12.2002**
(21) Application number: 97850158.3
(22) Date of filing: 13.11.1997
(51) Int. Cl.: F16C 23/10, F16C 33/08, F16C 21/00, F16C 13/02

(54) **A method for mounting a bushing in a seat of a housing, and a device and a tool for accomplishing the method**
Verfahren zur Montage einer Hülse in den Sitz eines Gehäuses und Vorrichtung undWerkzeug für diese Montage
Procéder pour monter une douille dans le siège d'un carter et dispositif et outil pour appliquer ce procédé.

(30) Priority: 14.11.1996 SE 9604181
(43) Date of publication of application: 20.05.1998
(73) Proprietor: Aktiebolaget SKF, S-415 50 Göteborg (SE)
(72) Inventor: Abrahamsson, Lars, 612 30 Finspong (SE); Kjellberg, Hans, 433 68 Sävedalen (SE); Sundqvist, Sven, 413 19 Göteborg (SE)
(74) Representative: Westman, P. Börje I.

(56) References cited:
- WO-A-94/18070
- WO-A-97/39253
- DE-A- 1 605 082
- DE-A- 3 004 402
- DE-A- 3 324 811
- FR-A- 1 093 768
- GB-A- 2 074 691
- US-A- 3 385 640
- US-A- 3 453 031

## Description

The present invention relates to a method for mounting an eccentric bushing in a seat of a housing, e.g. a bearing housing for allowing it thereupon to be readily displaceable in circumferential direction, or in axial direction or in a combination of circumferential and axial directions in a slip-stick free manner. (US-3 453 031 A).

For different types of rolling mills it is common that they have at least a pair of cooperating rollers, one or more of said rollers, usually the lower one, being rotary journalled at a fixed level, whereas the other one, commonly the upper roller, is rotary journalled in a manner allowing it to be raised and lowered relative to the lower, fixed roller in order to alter the mutual distance between the rollers, for effecting adjustment of the roll-nip, i.e. the working space between the rollers at rolling operations. Such adjustment is required during the pace of the rolling operation for reducing the measure to which the blank shall be rolled.

One method for making possible such adjustability of one of the rollers of a rolling mill is to provide the bearing housings of the adjustable (top) roller with an internal eccentric bushing, in which the outer rings of the bearings supporting the roller are mounted. Thereby it is possible to adjust the level of the adjustable (top) roller by angularly displacing the eccentric linings in their seats in the bearing housing, thereby adjusting the mutual distance between the axes of the two rollers. As stated above it is desirable that such adjustment can be effected during rolling operations, i.e. without the necessity of making the rollers cease from rotating or even without having them relieved from the often very high operating load.

Hitherto the eccentric bushings of such assemblies and also centric bushings of other assemblies often have been made from different metallic materials, which thereby together with the metallic seat in the bearing housing form material combinations such as steel/steel, bronze/steel, etcetera. This has created problems difficult to master, since the different material combinations used, have proven themselves to give raise to high and uneven friction, poor precision, low repetition accuracy and so called stick-slip effects, i.e. the materials at the interface between the bearing housing seat and the bushing will tend to smear, thereby causing the bushing to adhere to the seat, thereby withstanding the external force given thereto for making it move angularly and or axially in the seat and then suddenly to come loose and move in peripheral direction in an uncontrolled manner in the seat.

DE 16 05 082 A refers to a shaft roller bearing for a rail vehicle, where it for preventing fretting corrosion between the outer ring of the bearing and the seat of a housing, is provided a bushing preventing direct contact between bearing ring and seat. The bushing can be made from a plastic material based on polytetrafluoro ethylene. The purpose of this bushing thus is to prevent contact between the metallic surfaces, and it is not intended to allow the outer bearing ring to move circumferentially in relation to the housing seat.

GB 2 074 691 discloses a process and installation for internally lining a conduit, for making the conduit fluidtight. Here is used a substantially cylindrical, balloon-shaped fluidtight envelope, which is inflated to press the lining against the inner wall of the conduit, during the time a resin adhesive between the lining and the conduit under influence of the pressure and a controlled temperature is setting. Such an open balloon would inevitably have a tendency of obtaining a substantially elliptic cross-section, thereby giving insufficient pressing force at the axial ends of the conduit. The purpose of the present invention is to propose a method for mounting an eccentric bushing in a seat of a bearing housing for allowing it thereupon to be readily displaceable in circumferential and axial directions in a slip-stick free manner, thereby solving i.a. the problems mentioned above and to provide an assembly, which gives a possibility of exact adjustment of the angular and also the axial position of the bushing, thereby also making it possible continuously to control the roll-nip in a rolling mill without such undesired results as earlier experienced and this is achieved in the manner defined in the accompanying claim 1.

The invention also refers to a device for accomplishing the method and this device is defined in claim 6. Finally the invention refers to a tool for accomplishing this method, and this tool is defined in the accompanying claim 8.

Hereinafter the invention will be further described with reference to an embodiment illustrated in the accompanying drawings.
Fig. 1 shows in cross section a part of a roll journal of a rolling mill, with a bearing in which the journal is supported and a bearing housing having an eccentric bearing seat bushing.
Fig. 2 is a schematic front view of the bearing housing according to Fig. 1, intimated together with a mounting tool for said bushing.
Fig. 3 is a schematic end view of the bearing housing shown in Fig. 2.
Fig. 4 is a section along line IV-IV in Fig. 3,
Fig. 5 is a part of the section from Fig. 4, shown in bigger scale, and
Fig.s 6 and 7 show a mounting means for mounting the bushing in the bearing housing shown in cross section and from the end side respectively.

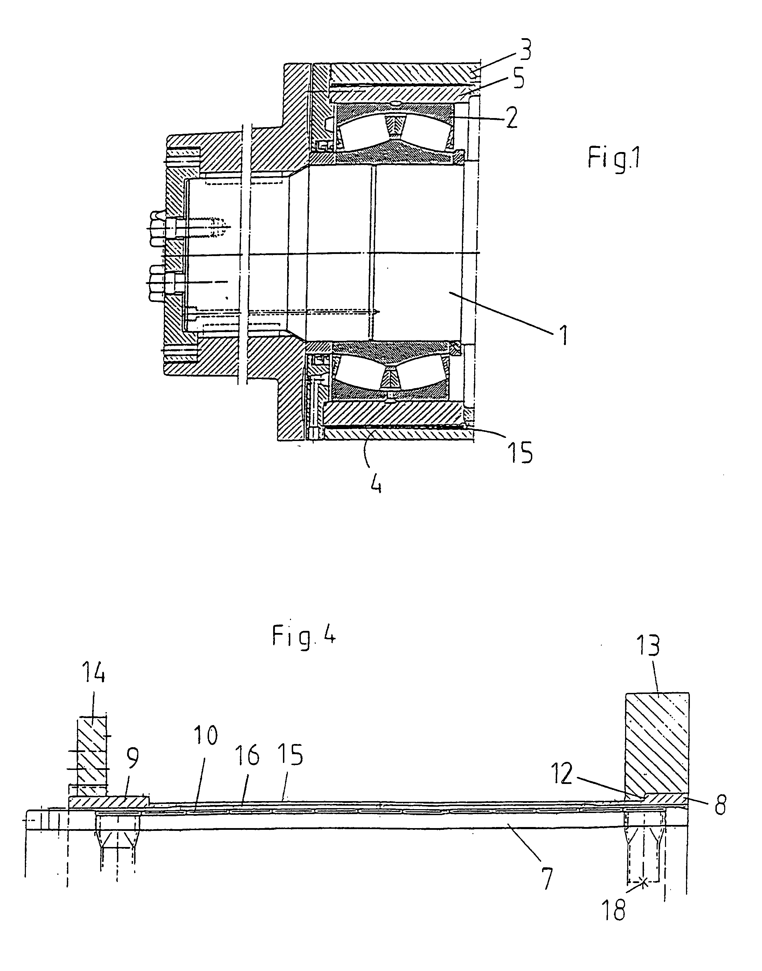

Fig. 1 shows schematically a part of a roll journal 1 of a rolling mill, journalled in a two-row spherical roller bearing 2 positioned in a bearing housing 3. The bearing housing has a seat 4, and an eccentric bushing 5 interposed between the seat 4 and the outer race ring of the roller bearing 3. By means of this eccentric bushing 5, which is arranged to be rotatable within the bearing housing seat, it is possible to displace the roll journal relative to the centre of the bearing housing, thereby altering the position of the roll journal and the milling roll vertically. The bearing has been mounted on the roll journal 1 in conventional manner and is secured axially on the roll journal with common positioning and locking means, which are no part of the invention as such and therefore will not be further described. It also is evident that the spherical roller bearing shown in Fig. 1 of the drawing can be replaced for any other suitable bearing or bearing combination without departing from the inventive idea. Furthermore it is evident that it is not vital for the invention that the bushing to be secured in this manner is an eccentric bushing, but any type of bushing can be mounted and secured in the same manner and with the same advantages as the eccentric bushing intended for controlling roll-nip in a rolling mill.

Between the housing seat 4 and the eccentric bushing 5 is arranged a layer or lining 15, having a low friction surface facing the bushing 5, and which is preferably, but not necessarily based on polytetrafluoro ethylene, PTFE. It was considered that this material must be fixedly attached to the bearing housing seat in order to give a desired effect, and it also was considered that the best manner to arrest the lining was by way of glueing. However, tests made showed that it was impossible to affix a pure PTFE layer to the bearing housing, in such a manner that it would adhere thereto.

A material thought to be appropriate was found in the dry sliding bearing material GLYCODUR®, although also other materials having about the same properties, would be useful for this lining. The GLYCODUR® has a sheet steel backing, which is copper plated and on its low friction surface has a porous layer of tin bronze, having a thickness of 0.2 to 0.35 mm and the pores are filled with polytetrafluoro ethylene, PTFE, together with other friction-reducing additives. The opposite side of the thin steel backing has a very thin tin layer covering the copper layer.

Tests made for affixing the GLYCODUR® strip to the seat in the bearing housing failed, as the material would not adhere to the seat surface, no matter which type of glue, which was used and no matter which surface finish the seat was given.

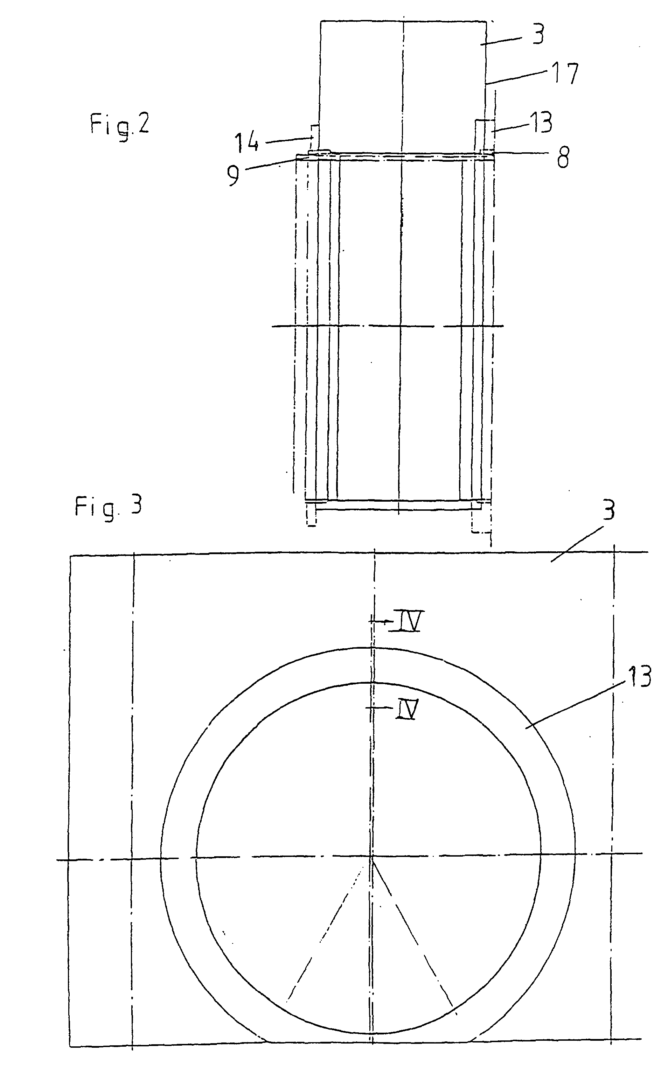

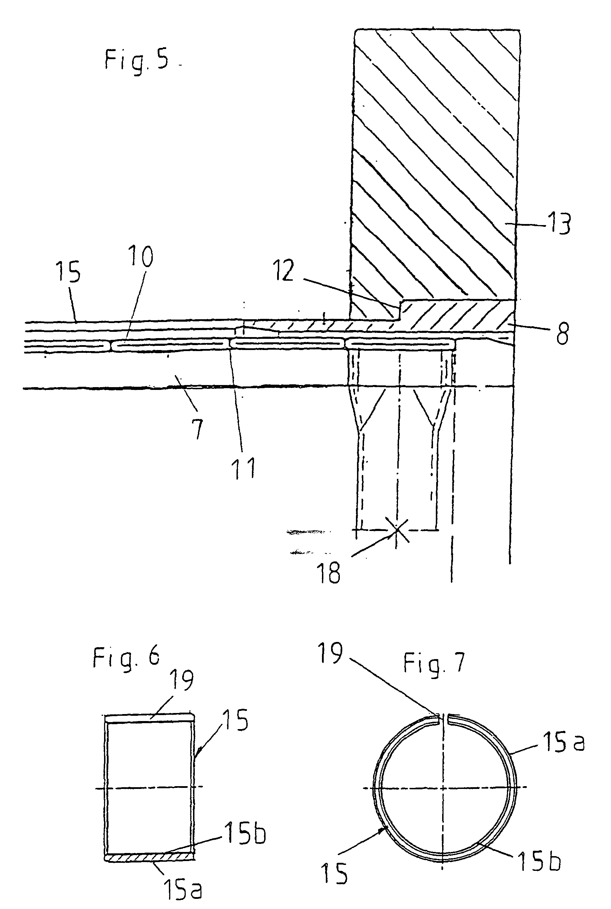

The solution proved itself to be to remove the copper and tin layers on the rear side of the backing, thus that the surface to be glued to the bearing housing seat was pure steel. With a GLYCODUR® strip thus treated it was found that a sufficient adherance was obtained between the steel surface of the strip and the surface of the bearing housing seat when using a glue, e.g. such as ARALDITE® AV144-2/HV 997. However it was found that it still was difficult to obtain an even and satisfactory distribution of the glue over the entire interface. For this reason was developed a tool, which is schematically shown in Fig.s 2 to 5, and which incorporates a tubular carrier 7, two sleeves 8, 9 positioned over said carrier 7, an inflateable member 10 (see Fig.4) positioned over the tubular carrier member 7. The two sleeves are positioned spaced apart over said tubular carrier with a mutual spacing corresponding to the axial length of the GLYCODUR® strip to be affixed to the bearing housing seat. Each one of said sleeves 8, 9 having, at least at their ends facing each other, a wall thickness, which corresponds to the thickness of the GLYCODUR® strip to be affixed to the bearing housing seat. The outer envelope surface of the tubular carrier member 7 has a recessed portion 11 situated between its ends and having a depth sufficient to accomodate said inflateable member 10, when this is in non-inflated condition. The sleeves 8,9 are positioned over the ends of the tubular carrier member 7, and are located so that they cover at least a short axial portion of the inflateable member 10 at each end of the said recessed portion 11, thereby clamping the axial end portions of said inflateable member into the recessed portion 11. One of said sleeves, in Figs 2, 4 and 5 the right hand sleeve 8 is equipped with a radially outwardly projecting end shoulder 12 against which a washer 13 abuts. At the opposite sleeve 9, e.g. Fig. 4, is provided a second, radially projecting washer 14, which can be detachably attached to the said sleeve 9 in a suitable manner, e.g. by means of a screw joint.

For the inflateable tubular member 10 can preferably be used a flat-wound hose, which thereby is arranged with the adjacent loops of the hose laying in close contact with each other to form a substantially continuous coil of an inflatable tubing. The low friction material, such as e.g. GLYCODUR® is provided in form of a split ring-formed bushing 15 as shown in Fig.s 6, 7, and which is positioned upon the flat-wound hose or similar inflatable member in the space between the inwardly facing ends of the two sleeves 8,9, whereby the low friction material is positioned with the low friction surface facing the inflatable member and with the backing, i.e. the steel surface facing outwards. The low friction material hereby will lay flush with the upper surfaces of the axially adjoining sleeves 8,9, as the inwardly facing ends of these are of the same thickness as the low friction material. Between the inflateable member and the portions of the sleeves contacting them and also between the inflateable member and the low friction material is preferably positioned a plastic film layer 16 arranged to seal off the space in order to prevent glue from leaking out. For securing the flat-wound hose 10 to the tubular carrier member 7 a string of glue (not shown) is preferably positioned between the hose and the carrier member.

When the low friction material layer shall be affixed to the seat of the bearing housing, an appropriate amount of a suitable adhesive is positioned in the seat. The carrier 7 with the inflatable member 10 arranged in the recessed portion 11 thereof, the sealing plastic film 16, the low friction material 15, the end sleeves 8, 9 and one of the end washers, i.e. the one 13 supported by the shoulder 12 of the right hand end sleeve 8, are together as a unit pushed sideways into the interior of the housing, until the said end washer 13 with its side face comes to engagement against the outer side face of the housing 17, as intimated in Fig. 2. The other end washer 14 then is attached to the opposite end sleeve , i.e. in the embodiment intimated it is screwed on to it.

In this position with the two end washers 13, 14 engaging opposite external end faces of the bearing housing 3, the tubular member or hose 10 is inflated, whereby the flat-wound hose will expand radially from the surface of the carrier 7, thereby uniformly pressing the steel backing of the GLYCODUR® lining 15 against glue earlier applied to the internal surface of the bearing housing seat. By applying a sufficient pressure inside the hose it is possible to cause the glue to be uniformly pressed out over the bearing housing seat surface and to make the lining be in close contact against it during the time required for the glue to stiffen, thereby ascertaining that the lining is securely connected to the seat. For this purpose the hose is provided with a hose connection 18 which is connectable to a not shown source of pressurized gas, e.g. air. Although not shown in detail the hose connection 18 is preferably equipped with valve means operable to allow the pressure medium, such as air, to be introduced into and discharged from the hose.

The lining 15, as shown in Fig.s 6 and 7 in cross section and side view respectively, as earlier mentioned can preferably be in form of a bushing with a longitudinal slot 19, whereby the lining can be easily adapted to the seat to which it shall be affixed in spite of any variations in seat dimensions and the like. In the case this lining 15 is a strip of GLYCODUR® or the like, it comprises an external steel backing 15a and an internal low friction layer 15b, preferably based on PTFE or another similar low friction material.

Although not shown in the drawings it can be appropriate to secure the end edges of the low friction lining to the bearing housing by stop screws or the like for prevent flaking, and in the case of mounting an eccentric bushing for obtaining a slip-stick free adjustability of the roll-nip in a rolling mill it also is advantageous to treat the surface of the eccentric bushing facing away from the low friction material with a surface treatment for preventing rust.

The invention is not limited to the embodiment shown in and described in connection to the accompanying drawings, but modifications and variations are possible within the scope of the accompanying claims.

## Claims

1. A method for mounting an eccentric bushing (5) in a seat of a housing (3) for allowing it thereupon to be readily displaceable in circumferential direction or axial direction or a combination of circumferential and axial directions in a slip-stick free manner,
**characterized in,**
positioning a lining (1) having a low friction surface (15b) between the seat (4) of the housing (3) and said bushing (5), and affixing said lining to said seat (4) in a manner, such that the low friction surface is facing the bushing (5).

2. A method as claimed in claim 1,
**characterized in,**
using a low friction lining (15) having a low friction sliding surface (15b) based on polytetrafluoro ethylene (PTFE) and a steel backing (15a).

3. A method as claimed in claim 2,
**characterized in,**
using a PTFE-based low friction lining (15) made from GLYCODUR®, modified to have a pure steel surface (15a) to be affixed to the said seat (4).

4. A method as claimed in anyone of claims 1-3,
**characterized in,**
glueing the backing side (15a) of the low friction lining (15) to the interior of the housing seat (4), and pressing during the time the adhesive is curing, the lining radially outwards against the seat surface over substantially the entire extension thereof.

5. A method as claimed in anyone of claims 1-4,
**characterized in,**
using an inflatable tubular member (10) wound in flat state about a carrier (7) having a substantially cylindrical outer surface, positioning said carrier with the flat tubular member (10) positioned thereabout in the opening of the housing (3) with the surface of the tubular member inside the low friction lining (15),
inflating the inflatable tubular member (10) until it engages under pressure radially against the low friction lining (15) on the side surface (15b) thereof facing away from the housing seat (4), and maintaining said pressure for a time sufficient for allowing the adhesive to set, and
thereupon releaving the pressure from the inflatable member (10) and removing it from the housing.

6. A device for accomplishing the method for mounting an eccentric bushing (5) in a seat (4) of a housing (3), preferably a bearing housing, for allowing it thereupon to be readily displaceable in circumferential and axial directions in a slip-stick free manner as claimed in claim 1,
**characterized therein,**
that a thin layer (15b) of a low friction material is provided in the seat (4) of the housing (3), said thin layer being interposed between the seat surface (4) and the external surface of the bushing (5).

7. A device as claimed in claim 8,
**characterized therein,**
that a joint, preferably a glue joint is provided for firmly connecting the thin low friction layer (15b) to the surface of the seat (4).

8. A tool for accomplishing the method according to anyone of claims 1-5,
**characterized therein,**
that the tool comprises a carrier (7) having an outer shape substantially corresponding to the interior shape of the housing seat (4) an inflatable tubular member (10) wound thereabout in a flat state and with the windings in close lateral contact with each others, said tubular member being provided with at least one opening (18) for introduction and discharge of a gas such as air under pressure.

## Patentansprüche

1. Verfahren zur Montage einer exzentrischen Buchse (5) in einem Sitz eines Gehäuses (3), um es der Buchse (5) daraufhin zu ermöglichen, leicht in Umfangsrichtung oder axialer Richtung oder einer Kombination aus Umfangsrichtung und Axialrichtung in einer Weise frei von Slip-Stick-Effekten verstellbar zu sein, **dadurch gekennzeichnet, daß** zwischen dem Sitz (4) des Gehäuses (3) und der Buchse (5) eine Zwischenlage (15) mit einer Oberfläche (15b) mit niedriger Reibung angeordnet wird, wobei die Zwischenlage (15) an dem Sitz (4) in einer Weise festgelegt wird, daß die Fläche mit niedriger Reibung der Buchse (5) zugewandt ist.

2. Verfahren nach Anspruch 1, **dadurch gekennzeichnet, daß** eine reibarme Zwischenlage (5) mit einer Gleitfläche (15b) mit niedriger Reibung verwendet wird, die auf Polytetrafluorethylen (PTFE) und einer Stahlverstärkung (15a) basiert.

3. Verfahren nach Anspruch 2, **dadurch gekennzeichnet, daß** eine PTFE-basierte reibarme Zwischenlage (15) verwendet wird, die aus GLYCODUR® hergestellt und dahingehend modifiziert ist, daß sie eine reine Stahlfläche (15a) zur Befestigung an dem Sitz (4) aufweist.

4. Verfahren nach einem der Ansprüche 1 bis 3, **dadurch gekennzeichnet, daß** die Rückseite (15a) der reibarmen Zwischenlage (15) mit dem Inneren des Gehäusesitzes (4) verklebt und während der Zeit, während welcher der Klebstoff aushärtet, die Zwischenlage radial nach außen gegen die Sitzfläche über im wesentlichen ihre gesamte Ausdehnung gepreßt wird.

5. Verfahren nach einem der Ansprüche 1 bis 4, **dadurch gekennzeichnet, daß**
ein aufblasbares schlauchförmiges Element (10) verwendet wird, das im flachen Zustand um einen Träger (7) gewikkelt ist, der eine im wesentlichen zylindrische Außenfläche besitzt,
der Träger mit dem um ihn angeordneten flachen Schlauchelement (10) in der Öffnung des Gehäuses (3) mit der Fläche des Schlauchelements innenseitig der reibarmen Zwischenlage (15) angeordnet wird,
das aufblasbare Schlauchelement (10) aufgeblasen wird, bis es unter Druck radial gegen die reibarme Zwischenlage (15) an deren von dem Gehäusesitz (4) weg weisender Seitenfläche (15b) anliegt und der Druck für eine ausreichende Zeit aufrechterhalten wird, um es dem Kleber zu ermöglichen, auszuhärten und
daraufhin der Druck aus dem aufblasbaren Element (10) abgelassen wird und dieses aus dem Gehäuse entfernt wird.

6. Vorrichtung zur Durchführung des Verfahrens zur Montage einer exzentrischen Buchse (5) in einem Sitz (4) eines Gehäuses (3), vorzugsweise eines Lagergehäuses, um es ihr daraufhin zu erlauben, leicht in Umfangsrichtung und axialer Richtung in einer Weise frei von Slip-Stick-Effekten verstellbar zu sein, gemäß Anspruch 1, **dadurch gekennzeichnet, daß** eine dünne Lage (15b) aus einem reibarmen Material in dem Sitz (4) des Gehäuses (3) vorgesehen ist, wobei die dünne Lage zwischen der Sitzfläche (4) und der Außenfläche der Buchse (5) angeordnet ist.

7. Vorrichtung nach Anspruch 6, **dadurch gekennzeichnet, daß** eine Verbindung, vorzugsweise eine Klebeverbindung, zum festen Verbinden der dünnen reibarmen Lage (15b) mit der Fläche des Sitzes (4) vorgesehen ist.

8. Werkzeug zur Durchführung des Verfahrens nach einem der Ansprüche 1 bis 5, **dadurch gekennzeichnet, daß** das Werkzeug einen Träger (7) mit einer der Innenform des Gehäusesitzes (4) und ein aufblasbares Schlauchelement (10) aufweist, das um den Träger in einem flachen Zustand mit den Windungen in nahem seitlichem Kontakt zueinander gewickelt ist, wobei das Schlauchelement mit wenigstens einer Öffnung (18) zum Einführen und Auslassen von Gas, wie z. B. unter Druck stehender Luft, versehen ist.

## Revendications

1. Procédé pour monter une douille excentrique (5) dans un siège d'un carter (3) pour permettre ainsi à celle-ci de pouvoir être facilement déplacée dans la direction axiale ou dans la direction axiale ou dans une combinaison de directions circonférentielle et axiale sans adhérence-patinage,
**caractérisé par** les étapes consistant à
mettre en place entre le siège (4) du carter (3) et ladite douille (5) un revêtement (1) à surface antifriction (15b), et fixer ledit revêtement audit siège (4) de telle manière que la surface antifriction soit en regard de la douille 5.

2. Procédé selon la revendication 1,
**caractérisé par** l'étape consistant à
utiliser un revêtement antifriction (15) ayant une surface glissante antifriction (15b) à base de polytétrafluoréthylène (PTFE) et un support (15a) en acier.

3. Procédé selon la revendication 2,
**caractérisé par** l'étape consistant à
utiliser un revêtement antifriction 15 à base de PTFE, constitué par du GLYCODUR®, modifié pour avoir une surface (15a) en acier pur à fixer audit siège (4).

4. Procédé selon l'une quelconque des revendications 1 à 3,
**caractérisé par** les étapes consistant à
coller le dos (15a) du revêtement antifriction (15) à l'intérieur du siège (4) de carter et, pendant le durcissement de la colle, comprimer le revêtement radialement vers l'extérieur contre la surface du siège sensiblement sur toute l'étendue de celle-ci.

5. Procédé selon l'une quelconque des revendications 1 à 4,
**caractérisé par** les étapes consistant à
utiliser un élément tubulaire gonflable (10) enroulé à plat autour d'un corps (7) à surface extérieure sensiblement cylindrique,
placer dans l'ouverture du carter (3) ledit corps autour duquel est installé l'élément tubulaire plat (10), la surface de l'élément tubulaire étant à l'intérieur du revêtement antifriction (15),
gonfler l'élément tubulaire gonflable (10) jusqu'à ce qu'il vienne, sous pression, radialement contre le revêtement antifriction (15) sur la face (15b) de celui-ci orientée à l'opposé du siège (4) de carter et maintenir ladite pression pendant un temps suffisant pour permettre à la colle de durcir, et
relâcher alors la pression exercée sur l'élément gonflable (10) et retirer celui-ci du carter.

6. Dispositif pour mettre en oeuvre le procédé servant à monter une douille excentrique (5) dans un siège (4) d'un carter (3), de préférence un carter de palier, pour permettre alors à celui-ci d'être facilement déplaçable dans des directions circonférentielle et axiale, sans adhérence-patinage, selon la revendication 1,
**caractérisé en ce que**
une mince couche (15b) de matériau antifriction est disposée dans le siège (4) du carter (3), ladite mince couche étant intercalée entre la surface du siège (4) et la surface extérieure de la douille (5).

7. Dispositif selon la revendication 8,
**caractérisé en ce que**
un assemblage, de préférence un assemblage collé est réalisé pour assujettir solidement la mince couche antifriction (15b) à la surface du siège (4).

8. Outil pour mettre en oeuvre le procédé selon l'une quelconque des revendications 1 à 5,
**caractérisé en ce que**
l'outil comprend un corps (7) dont la forme extérieure correspond sensiblement à la forme intérieure du siège (4) de carter, un élément tubulaire gonflable (10) enroulé à plat autour de celui-ci, les spires étant latéralement serrées les unes contre les autres, ledit élément tubulaire étant pourvu d'au moins une ouverture (18) pour introduire et refouler un gaz tel que de l'air sous pression.
